# EUROPEAN PATENT APPLICATION

(11) **EP 0 587 284 A2**
(43) Date of publication of application: **16.03.1994**
(21) Application number: 93305558.4
(22) Date of filing: 15.07.1993
(51) Int. Cl.: G01J 3/453, G02B 7/182

(54) **Interferometer and beamsplitter holder therefor**

(30) Priority: 10.09.1992 US 943432
(71) Applicant: NICOLET INSTRUMENT CORPORATION, Madison, WI 53711-4495 (US)
(72) Inventor: Jones, George D., Deerfield, Wisconsin 53531 (US)
(74) Representative: Senior, Alan Murray

(57) **Abstract**

A beamsplitter holder for an interferometer such as that used in a Fourier transform infrared spectrometer has a holder body with coplanar mounting surfaces formed about a main opening, a beamsplitter mounted against the mounting surfaces, and locating surfaces on the holder body which may be coplanar with the mounting surfaces. The holder is mounted in an interferometer housing which has positioning surfaces formed therein which are positioned to mate with the locating surfaces on the holder body. When plungers within the interferometer housing are engaged against the surface of the holder opposite the locating surfaces, the locating surfaces are pressed into contact with the coplanar positioning surfaces in the interferometer housing to precisely locate the semi-transparent surface of the beamsplitter within the interferometer with minimal distortion of the various parts. The beamsplitter and an adjacent compensator disk may be mounted in the beamsplitter holder using clips positioned around the beamsplitter and compensator which are connected together by springs which extend through holes in the body of the holder. The clips apply a controlled pressure against the surfaces of the beamsplitter and the compensator to press these elements inwardly to hold them in place in the beamsplitter holder, again with minimal distortion.

## Description

### FIELD OF THE INVENTION

This invention pertains generally to the field of interferometers such as those used in infrared spectrometers, and to the beamsplitter holders in such interferometers.

### BACKGROUND OF THE INVENTION

Fourier transform infrared (FTIR) spectrometers are commonly used in the analysis of chemical compounds. These instruments operate by measuring the absorption of infrared radiation by a sample at various wavelengths in the infrared spectrum and comparing the results with known standards to develop information on the chemical composition of the sample. In a typical FTIR spectrometer, infrared radiation from an infrared source is collected and directed through a series of mirrors or other focusing elements to an interferometer (typically a Michelson interferometer) which includes a beamsplitter that splits the infrared radiation into two separate beams. The two separate beams are then directed within the interferometer to two mirrors, one fixed and one movable, which reflect the beams back to the beamsplitter where the two beams are partially recombined into a composite beam that exits the interferometer. Constructive and destructive interference of certain wavelengths occurs as the two beams are combined into the composite beam, and these wavelengths change with the movement of the moving mirror. The exit beam is eventually transmitted through or reflected from the sample to be analyzed, and finally brought to focus on an infrared detector. The interferometer system, in combination with the sample, modulates the intensity of the infrared radiation that impinges on the detector and forms a time varying intensity signal. The output of the detector is digitized and processed in a computer in a conventional manner to yield the desired spectral information concerning the sample.

It is critical to the proper performance of such instruments that the beamsplitter be mounted accurately in position within the interferometer so that the infrared beam is properly split and recombined. Deviations in the position of the beamsplitter can produce small errors in the time domain interferogram obtained from the detector, which may translate into large errors in the frequency domain spectrum. The beamsplitter used in an FTIR instrument is generally the most delicate item in the instrument. The beamsplitter materials are typically chosen to be highly transparent to infrared radiation, but such materials, such as potassium bromide (KBr), are relatively fragile and must be mounted carefully within the beamsplitter holder. An example of a prior system for mounting and locating the beamsplitter, which also has an additional mechanism for protecting the beamsplitter when not in use, is shown in United States Patent No. 4,844,614 to Henderson, et al. It is desirable that the interferometer be constructed so that it can clamp the beamsplitter holder rigidly in place when the holder is properly positioned, while allowing the beamsplitter to be removed and replaced with another beamsplitter without significant effort or realignment. The crucial surface is the partially mirrored (semi-transparent or, equivalently, semi-reflective) surface of the beamsplitter. The beamsplitter holder must mount in the interferometer in a position such that the partially mirrored surface of the beamsplitter will lie very precisely in the proper plane in alignment with the input and output beams of the interferometer. In addition to the mounting system illustrated in patent 4,844,614, some prior interferometer systems have used air pressure driven clamps to hold the beamsplitter in position. While such clamps are effective, they require that a source of air pressure be available in the spectrometer and also require a somewhat complicated clamping mechanism.

In typical prior interferometers, the beamsplitter holder had pads with surfaces which were located when the holder was in place in the interferometer; these pads generally face the stationary mirror on the opposite side of the beamsplitter holder from the moving mirror. These locating pads are typically not in the same plane as the partially mirrored (semi-transparent) surface of the beamsplitter, so that distortions, thermal or otherwise, can have a significant effect on the location of the beamsplitter surface. Above all, it is crucial that the beamsplitter be clamped firmly in place without warping or distorting it in any way by the clamping mechanism itself.

### SUMMARY OF THE INVENTION

In accordance with the present invention, a beamsplitter holder for an interferometer, such as that used in an FTIR spectrometer, is formed to locate the semi-transparent surface of the interferometer in a precise position within the interferometer. The holder has coplanar mounting surfaces for the beamsplitter positioned about a main opening in the body of the holder. The semi-transparent surface of the beamsplitter is engaged against the mounting surfaces to define the position of the beamsplitter within the holder. Further, the holder body has co-planar locating surfaces on the holder spaced outwardly from the main opening which also preferably lie in the same plane as the mounting surfaces. Because the locating surfaces for the holder are in the same plane as the mounting surfaces and the semi-transparent surface of the beamsplitter, thermal distortions of the holder body will generally not change the position of the semi-transparent surface of the beamsplitter with respect to the locating surfaces on the holder.

The housing of the interferometer preferably has positioning surfaces which are positioned to engage against the locating surfaces on the holder. The positioning surfaces of the interferometer are precisely formed to all lie in the same plane. Thus, when the locating surfaces of the holder are engaged firmly against the positioning surfaces in the interferometer, the position of the semi-transparent surface of the beamsplitter will be precisely determined without requiring further adjustment or calibration.

Means are provided in the interferometer to apply pressure to the face of the beamsplitter holder opposite the face which has the locating surfaces formed thereon. Preferably, pressure is applied to the opposite face of the beamsplitter holder only at positions on the holder body which are directly opposite to the locator surfaces, thereby minimizing mechanical distortions of the holder. The pressure may be applied by a plunger mechanism comprising a plurality of plungers, riding loosely in bores formed in the interferometer housing, which have free ends which engage against abutment surfaces on the holder which are exactly opposite to the locator surfaces on the holder. The plungers are preferably driven by a common assembly which has a single spring applying pressure against a pressure plate which engages an end of each of the plungers to apply pressure on the plungers to drive them toward the beamsplitter holder. The plunger assembly is constructed so that the forces applied by each of the plungers will tend to balance as the plungers engage the abutment surfaces on the holder so as to minimize any difference in pressure applied to the holder at any of the positions at which the plungers engage the holder, thereby serving again to minimize mechanical distortions of the holder.

The mounting surfaces on the holder are preferably formed as three tabs which extend inwardly from the wall defining the main opening in the holder body. These three tabs are preferably symmetrically positioned about the main opening and may have surfaces which are preferably raised slightly above the surrounding surfaces of the body. The beamsplitter, typically formed as a solid circular disk of infrared transmissive material, is mounted with its semi-transparent surface engaging the mounting surfaces on the tabs so that the beamsplitter is supported at three positions -- defining the positioning plane which is also the plane of the beamsplitter surface -- without substantially obscuring the beamsplitter surface.

A compensator element, also generally formed as a circular disk of material, may be mounted in the holder adjacent to the semi-transparent beamsplitter surface. The tabs at the main opening in the holder body preferably also have surfaces opposite the mounting surfaces which can engage against the surface of the compensator at positions near its edges to hold the compensator in a precise position. Generally, it is preferred that the surface of the compensator facing the semi-transparent beamsplitter surface not be precisely parallel thereto. For this reason, the surfaces of the tabs opposite the mounting surfaces which engage the beamsplitter do not necessarily lie in a plane parallel to the mounting surfaces, but are slightly off parallel to provide a slight amount of tilt to the compensator with respect to the semi-transparent beamsplitter surface to minimize channeling of light between the compensator and the beamsplitter.

To hold the compensator and beamsplitter in place in the holder, a holding mechanism may include clips engaged to the outwardly exposed surface of the beamsplitter and the outwardly exposed surface of the compensator immediately above the positions at which the tabs engage the beamsplitter and compensator, respectively. Holes are formed through the holder body, at positions spaced just outwardly of the tabs, through which springs extend which connect to the two oppositely facing clips to apply inward spring pressure to the clips. The clips are formed to rock about a fulcrum to apply a precisely controlled pressure to the outwardly exposed surfaces of the beamsplitter and compensator, preferably such that the pressure applied by each clip extends generally in a line directly through the compensator, the tab, and the beamsplitter to the opposite clip. In this manner, the forces from the springs are applied primarily through the compensator, the tabs and the beamsplitter, and not on the surrounding holder, again minimizing mechanical stresses in the material of the holder surrounding the beamsplitter which could tend to distort the holder and thereby throw off the alignment of the semi-transparent surface of the beamsplitter.

The interferometer housing is preferably mounted to a substrate by three mounting feet which are located directly beneath and spaced about the beamsplitter holder. These mounting feet thus define the alignment of the interferometer with respect to the other components of the spectrometer mounted on the substrate. By mounting the interferometer to the substrate at positions located closely adjacent and around the beamsplitter, rather than at positions spaced away from the beamsplitter, the effect of distortions in the interferometer housing as it undergoes thermal expansions and contractions will be relatively minimized.

Further objects, features and advantages of the invention will be apparent from the following detailed description when taken in conjunction with the accompanying drawings.

### BRIEF DESCRIPTION OF THE DRAWINGS

In the drawings:

Fig. 1 is a top plan view of an interferometer in accordance with the present invention showing the opening into which the beamsplitter holder is inserted.

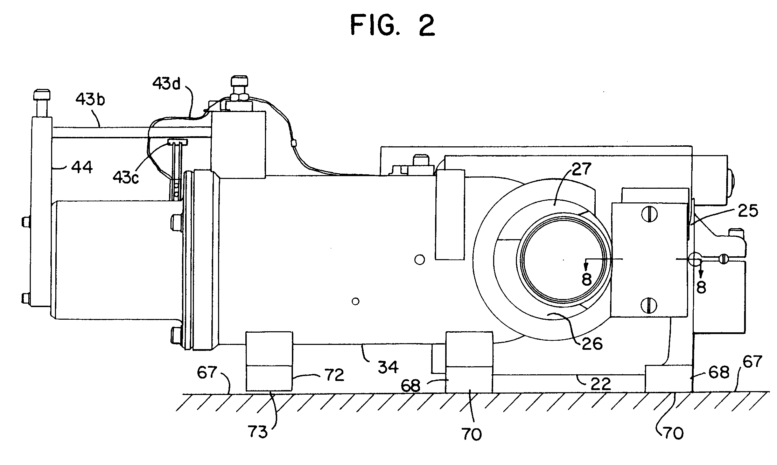

Fig. 2 is a side elevation view of the interferometer of Fig. 1.

Fig. 3 is a cross-sectional view through an exemplary preferred mounting structure for the moving mirror of the interferometer which may be utilized in the present invention.

Fig. 4 is a frontal perspective view of the beamsplitter holder in accordance with the present invention with the beamsplitter and compensator removed for illustrative purposes.

Fig. 5 is a back elevation view of the beamsplitter holder of Fig. 4.

Fig. 6 is a simplified view of the positioning surfaces on the interferometer housing with the beamsplitter holder and the plunger assembly shown in illustrative relative position with respect thereto.

Fig. 7 is a somewhat simplified cross-sectional view of the beamsplitter holder and a portion of the plunger assembly showing plungers engaged against abutment surfaces on the beamsplitter holder.

Fig. 8 is a partial cross-sectional view through the spring and cam structure of the plunger assembly within the interferometer housing taken generally along the lines 8-8 of Fig. 2.

Fig. 9 is a perspective view of the beamsplitter holder body with the mounting ring removed therefrom.

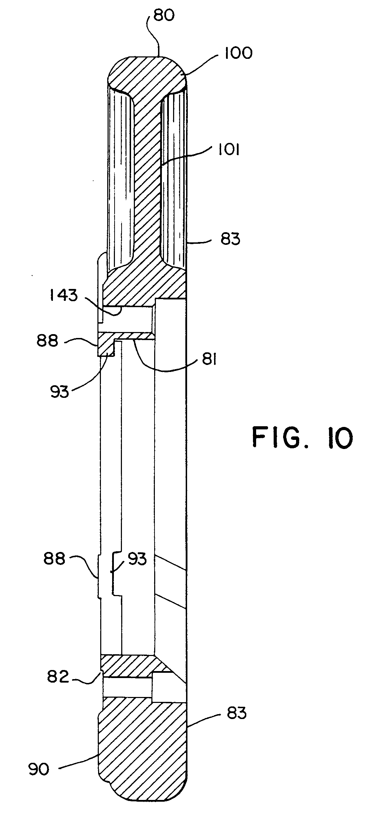

Fig. 10 is a cross-sectional view through the beamsplitter holder body of Fig. 9.

Fig. 11 is a plan view of one of the mounting clips that are used to hold the beamsplitter and compensator in the beamsplitter holder.

Fig. 12 is a side view of the clip of Fig. 11.

Fig. 13 is a view of the clip of Fig. 11 from the upper side of the clip as shown in Fig. 11.

### DETAILED DESCRIPTION OF THE INVENTION

The present invention is suited for use in Fourier transform infrared spectrometers which utilize an interferometer. Interferometers have other uses, and the interferometer and beamsplitter holder of the present invention may be utilized in any appropriate application. The present invention provides an improved interferometer which incorporates a beamsplitter holder therein which is easily and precisely positioned, allowing easy replacement of the beamsplitter without requiring significant realignment of the interferometer after the beamsplitter is replaced. Thus, beamsplitters may be replaced in the field by a user without the need for a highly trained technician. Replacement of a beamsplitter may be necessitated, for example, by damage to or breakage of a beamsplitter, or the need to use a different beamsplitter material for different applications of the spectrometer. The beamsplitter is held in the beamsplitter holder, and the holder is held precisely positioned in the interferometer, with minimal distortion of the beamsplitter, by applying clamping forces in a straight line through the various components.

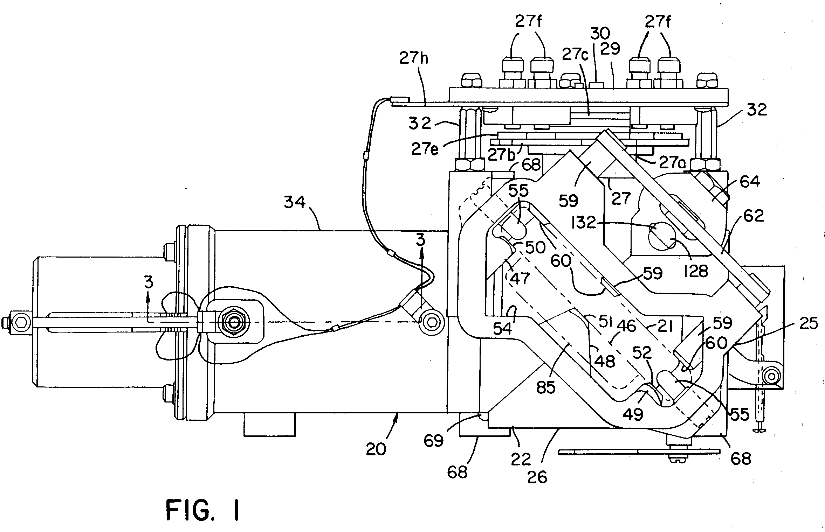

An exemplary interferometer incorporating the improved beamsplitter holder of the present invention is shown generally at 20 in Fig. 1. To best illustrate the internal parts of the interferometer related to the present invention, the position of a beamsplitter holder in accordance with the invention is shown by the dashed lines labeled 21 in Fig. 1. The construction of the beamsplitter holder 21 is described in detail below. The exemplary interferometer 20 is of substantially standard Michelson interferometer construction, although it is understood that the present invention may be embodied in any type of interferometer which utilizes a beamsplitter. The housing 22 of the interferometer may be formed of a metal casting, such as cast iron, for strength and stability. The housing has an entrance opening (not shown, but located generally at the position labeled 25 in Fig. 1) into which a beam of electromagnetic radiation (e.g., infrared) is introduced, and an exit opening 26. The interferometer includes a flat fixed mirror 27. The particular manner of mounting of this mirror is not a part of the present invention and may be accomplished in any desired way. An example of a suitable adjustable mounting mechanism for the fixed mirror is shown in European patent application publication No. 0389115, published September 26, 1990, to which reference may be had for a more detailed description of this exemplary mounting mechanism. For purposes of illustration, the mirror 27 is shown in Fig. 1 mounted to a mirror support 27a which is mounted to a ferrous actuator plate 27b which is mounted to a semi-flexible necked-down central column (not shown in Fig. 1) which is surrounded by a stack of rubber washers 27c. The washers are lightly compressed between the plate 27b and a printed circuit board 27h and help damp out vibrations. The column is mounted to a plate 29 by screws 30. The mounting plate 29 in turn is mounted to the interferometer housing 22 by three adjustable posts 32 which have spherical features which seat in countersunk cones in the mounting plate 29, providing for solid yet adjustable positioning of the plate 29 during coarse mechanical alignment. Autotune and servo controlled dynamic alignment of the interferometer is accomplished by electromagnets 27d attracting or repelling magnets 27e affixed to the ferrous actuator plate 27b. This allows extremely fine tilt control of the flat mirror 27. Additional initial fine mechanical adjustment is achieved by varying the gap between ferrous screws 27f and the permanent magnets 27e.

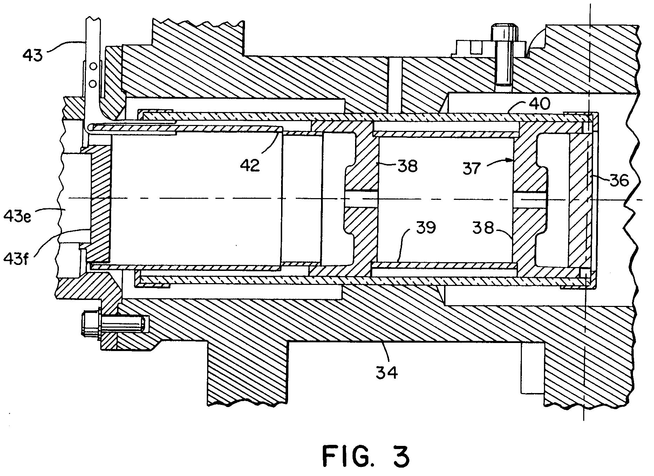

The housing 22 includes a cylindrical extension 34 which includes a moving mirror 36 (shown in Fig. 3) and a drive connected to the moving mirror to reciprocate the moving mirror axially back and forth, toward and away from the opening 25. As is well known, the action of the moving mirror in the Michelson interferometer causes the beam reflected from the stationary mirror 27 and the beam reflected from the moving mirror to be recombined at the beamsplitter (not shown in Fig. 1 but held in the holder 21) to form a modulated output beam which exits from the opening 26.

An exemplary mounting and drive for the moving mirror 36 is shown in cross-section in Fig. 3. The mirror 36 is mounted to a cylindrical piston-type bearing 37 which is composed of two cylindrical end pieces 38 formed of graphite, and a connecting sleeve 39 between them. The piston bearing 37 slids within the internal bore of a glass cylinder 40 which is mounted within the extension 34 of the interferometer housing. A light weight hollow tube 42 (partially shown in Fig. 3) having finely wound coils of conductive wire is affixed to an end piece 38 of the piston 37 opposite the movable mirror 36. A antirotation post 43 is also attached to the end of the tube 42. At the top end of this post 43 a small rod shaped magnet 43c is affixed which magnetically tracks another rod 43b to prevent rotation as the piston assembly 37 travels throughout its stroke, but the magnet 43c never contacts rod 43b. The coil provides the thrust to move the piston assembly when energized by current through the wires 43d affixed to the post 43, due to interaction with a large permanent magnet 43e and a magnetic pole piece 43f. Reversing the polarity of current through the coil 43d reverses the direction of travel of the piston 37. The foregoing drive is only exemplary of drives that may be utilized to move the moving mirror 36 in reciprocating motion, and any other driving mechanism for the moving mirror may be utilized.

To split the incoming beam passing through the entrance opening 25 properly, and to recombine accurately the beams reflected from the mirrors 27 and 36 to form the output beam which passes through the exit opening 26, it is essential that the beamsplitter be precisely positioned with respect to the mirrors 27 and 36, and to the extrance and exit beams. For example, if the beamsplitter is not at a 45° angle to each of the mirrors 27 and 36 (assuming the mirrors are at 90° to each other), then the beams that are split by the beamsplitter will not be accurately recombined by the splitter. Furthermore, the beamsplitter must be accurately held in place despite temperature variations in the interferometer which may cause changes in the dimensions of various of the parts. Moreover, any thermal stresses in the interferometer must not cause bending or distortion of the beamsplitter by exerting undue stresses on the beamsplitter holder which could distort the geometry of the beamsplitter. For example, if the beamsplitter holder is stressed so that the semi-transparent surface of the beamsplitter is distorted from a near perfect plane, the performance of the interferometer will be reduced. At the same time, it is desirable that the beamsplitter be readily replaceable in the field without extended (or even any) set up and alignment of the beamsplitter after the beamsplitter holder has been replaced.

In the present invention the interferometer housing 22 and the beamsplitter holder 21 cooperate to precisely locate the semi-transparent (or, equivalently, semi-reflective) surface of the beamsplitter in a desired plane in the interferometer. In Fig. 1, that plane is indicated by the dashed line labelled 46. The plane 46 is referenced to the beamsplitter housing 22 by three posts 47, 48 and 49 which have pads on the ends thereof which define positioning surfaces 50, 51 and 52 which preferably are coplanar with each other, and which are coplanar with and define the reference plane 46 in which the semi-transparent surface of the beamsplitter is to lie. The beamsplitter holder 21 fits into an access opening 54 in the top of the interferometer housing to allow the beamsplitter to be inserted therein, with the beamsplitter being stopped and supported by stop pins 55. The engagement between the beamsplitter holder 21 and the stop pins 55 defines both the vertical height and the lateral position of the beamsplitter.

The cooperation of the positioning surfaces 50-52 on the interferometer housing with mating locating surfaces on the beamsplitter holder, as explained below, fixes the orientation in space of a plane within the holder 21 to which the semi-transparent surface of the beamsplitter itself may be referenced. The beamsplitter holder 21 is pressed into contact with the surfaces 50-52 by plungers 59, preferably three as shown, having engagement surfaces 60 which contact the back of the beamsplitter holder 21 opposite the surfaces 50-52. The plungers 59 ride loosely in bores formed in the interferometer housing and are connected by a Tee bar pressure plate 62 to a single spring loaded driver unit 64 which applies spring pressure to the plate 62 which, in turn, provides spring pressure to the plungers 59. As explained further below, the drive unit 64 can release the plungers from engagement with the holder 21 to allow the holder to be removed and a new holder inserted, after which the plungers are reengaged with the holder to press the holder up against the positioning surfaces 50-52.

To position the interferometer 20 itself precisely within a spectrometer, the interferometer 20 has three mounting feet 68, each of which has a hole 69 for passing a bolt therethrough to firmly attach the interferometer to a substrate 67. The three feet 68 each have a flat bottom surface 70 which together define a reference plane for the interferometer on the mounting substrate 67. The three point mounting using the feet 68 provides a firm mounting for the interferometer, precisely locating the interferometer with respect to the substrate 67, and particularly locating the reference plane 46 within the interferometer (on which the beamsplitter surface is to lie) with respect to the substrate and the rest of the spectrometer. By utilizing the feet 68 (which are preferably cast integrally with the remainder of the cast iron housing), variations in the dimensions of the interferometer that occur as the temperature of the interferometer changes due to thermal expansion will substantially not affect the position of the reference plane 46. This result is obtained because the mounting feet 68 are located closely adjacent to the reference plane, and, preferably, (as shown in Fig. 1) with mounting feet on each end of the position of the beamsplitter holder 21 and closely spaced to the reference plane 46. The plane defined by the bottom surfaces 70 of the mounting feet is also preferably perpendicular to the reference plane 46. An additional mounting foot 72 is formed on the extension 34 of the housing but has a bottom surface 73 which is located slightly higher in elevation than the bottom surfaces 70 of the feet 68 (wherein the surfaces 70 are in coplanar with each other). Thus, when bolts are passed through the feet 68 to bring the surfaces 70 closely into engagement with the flat top surface of the substrate 67, the surface 73 of the mounting foot 72 will be spaced slightly above the substrate surface -- assuming that the substrate surface under the foot 72 is in the same plane as the portion of the substrate surface which engages the bottom surfaces 70 of the feet 68. Use of the extending foot 72 to help support the extension 34 of the housing is not necessary, but if it is used it is not tightly bolted down to the substrate unless a shim is inserted under the foot 73 so as not to distort the position of the housing.

A typical prior interferometer would not be mounted to the substrate 67 closely adjacent to the beamsplitter, but rather would have mounting feet on an extending portion of the interferometer housing, generally under the support structure for the moving mirror, and spaced some distance from the beamsplitter. However, it is found that by mounting the interferometer in accordance with the prior art at positions spaced away from the beamsplitter, thermal expansions and contractions of the interferometer housing will tend to accumulate because of the distance between the mounting feet and the beamsplitter, thereby providing a greater potential distortion of the position of the beamsplitter than results with the interferometer of the present invention which has the mounting feet located closely adjacent to, and preferably bracketing the beamsplitter and perpendicular to the beamsplitter plane.

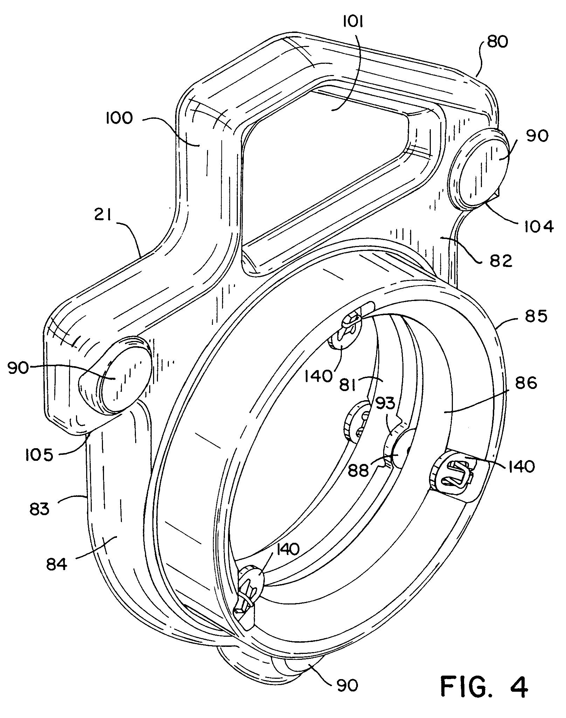

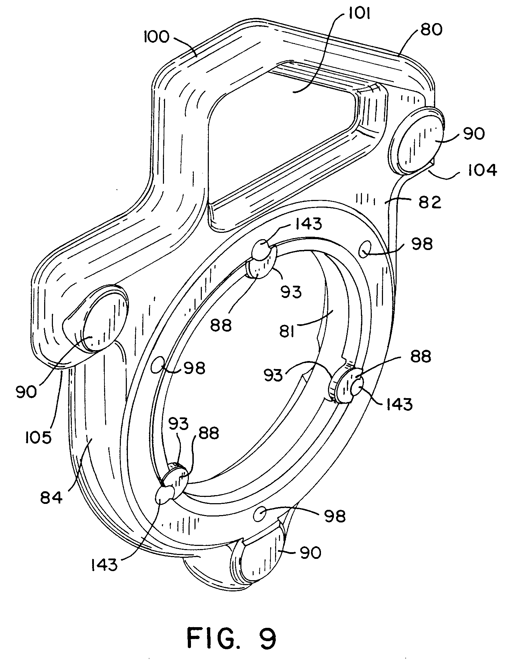

The beamsplitter holder 21 is shown in a perspective view in Fig. 4 in which, for purposes of clarity of illustration, the beamsplitter itself and the compensator for the beamsplitter are not shown. The body of the beamsplitter holder 21 includes a one piece holder body portion 80 which is preferably formed of a sturdy structural material, such as stainless steel. The holder body portion 80 has a wall 81 defining a main opening which extends from a front face 82 to a chamfer which extends to a back face 83 of the holder body portion 80. The body portion 80 has rounded peripheral sidewalls 84. The beamsplitter holder 21 has a beamsplitter mounting ring 85 attached to the front face 82 of the body portion 80, and the ring has an inner wall 86 which defines a main opening in the ring 85 which coincides with the main opening in the body portion 80. The ring 85 surrounds the edge of the disk shaped beamsplitter, and forms part of the body of the holder. The ring 85 may also be formed integrally with the body portion 80, if desired, although it is preferred that the ring be formed separately to allow mounting surfaces 88 to be readily machined coplanar with locating surfaces 90, e.g., by lapping on a flat lapping bed. As shown in Fig. 9 (wherein the ring 85 has been removed from the holder body 80) three mounting surfaces 88 are formed on the front face 82 of the holder body and are preferably raised slightly above the surrounding material of the holder. Each of the mounting surfaces 88 lies in the same plane, i.e., they are coplanar. In addition, the locating surfaces 90 are formed on the front face of the holder body and are raised slightly above the surrounding material of the holder body. Each of the surfaces 90 is coplanar with the others. In addition, the surfaces 90 are also preferably coplanar with the mounting surfaces 88. The locating surfaces 90 are spaced about the central opening defined by the wall 81 in the holder body and at positions outwardly spaced from the mounting ring 85. The surfaces 90 are positioned such that when the holder 21 is inserted into the beamsplitter and the holder engages the stop pins 55, the locating surfaces 90 will be located at the positioning surfaces 50, 51 and 52 on the interferometer housing.

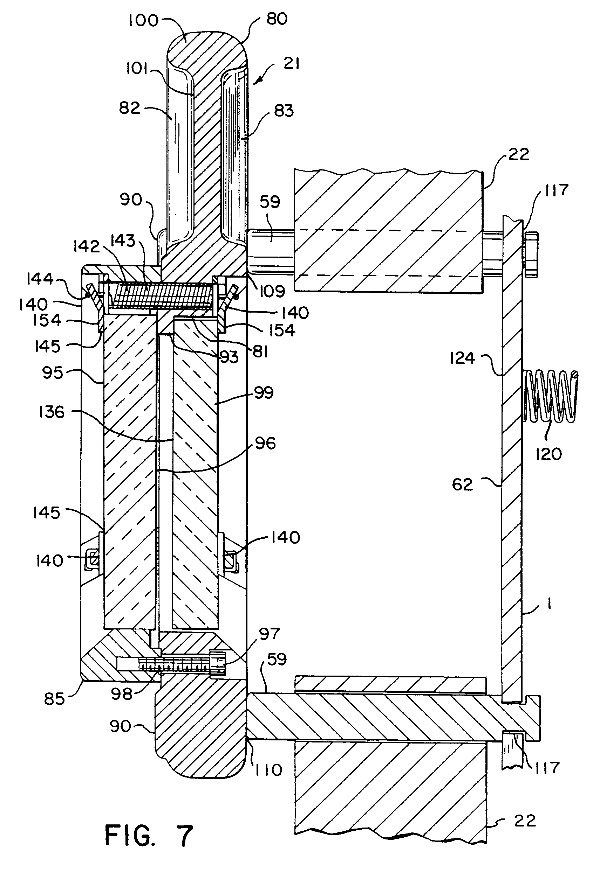

As illustrated in Figs. 4 and 9, the mounting surfaces 88 are formed on tabs 93 which extend inwardly from the wall 81 which defines the main opening of the holder body. As illustrated in Fig. 7, a beamsplitter 95, formed as a circular disk of infrared transmissive material (if the beam passing through the interferometer is infrared) has its semi-transparent beam splitting surface 96 engaged against the mounting surfaces 88 of the tabs 93. Thus, if the semi-transparent surface 96 is a plane, the engagement of the coplanar surfaces 88 with the planar surface 96 will precisely locate the surface 96 with respect to the holder 21. Moreover, the engagement of the locating surfaces 90 (which are preferably coplanar with the mounting surfaces 88) with the positioning surfaces 50-52 in the interferometer housing, will result in the semi-transparent surface 96 being precisely located with respect to the interferometer housing.

As illustrated in Fig. 7, to attach the beamsplitter mounting ring 85 firmly to the holder body portion 80, a plurality of screws 97 are passed through holes 98 (shown in Fig. 9) in the body portion 80 to thread into corresponding tapped holes in the mounting ring 85 and thus tightly attach the ring 85 onto the body portion 80. Although it is preferred that the mounting ring be formed separately from the remainder of the body 80, the two pieces can be formed integrally, and of, course, the holder body may be formed of one piece or many pieces rather than as the body portion 80 and the mounting ring 85.

As illustrated in Fig. 7, a compensator disk 99 may be mounted with one of its surfaces engaged with the back surfaces of the tabs 93 so that the surface of the compensator disk is in a position adjacent the beam splitter 95.

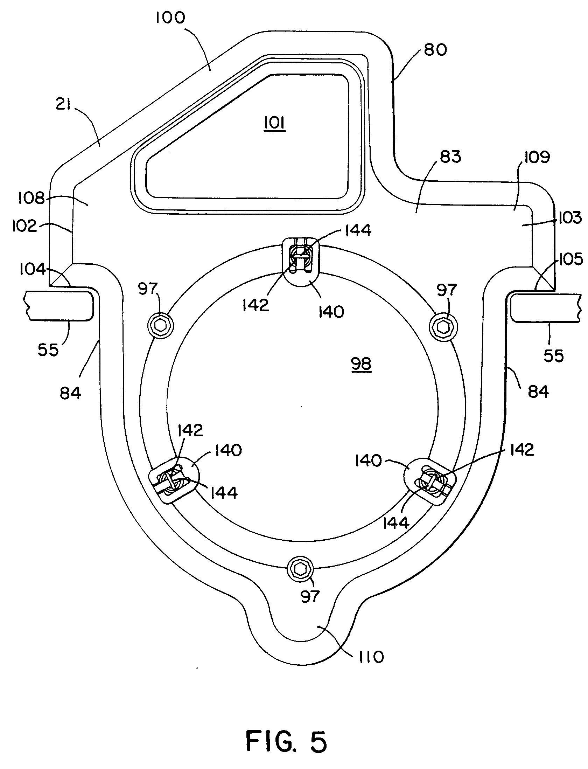

To allow a user to grasp conveniently the beamsplitter holder 21 either to remove it from the interferometer 20 or insert a new beamsplitter holder into the interferometer, the beamsplitter holder body portion 80 includes an upwardly extending portion 100 which has an indentation 101 therein which provides a convenient handle-type structure for grasping by the user. As illustrated in Fig. 5, the body portion 80 also includes a first lateral extension 102 and a second lateral extension 103 which extend outwardly from opposite sides of the main opening and have downwardly facing shoulders 104 and 105, respectively, which are positioned to engage with the stop pins 55 when the beamsplitter holder 21 is inserted into the interferometer. The engagement of the pins 55 with the shoulders 104 and 105 thus determines the vertical position of the beamsplitter holder within the interferometer. The inner ends of the stop pins 55 nearly contact the surfaces of the adjacent sidewalls 84 of the holder body, thereby providing accurate lateral location of the beamsplitter holder.

The back face 83 of the holder body also includes flat areas 108, 109 and 110, defining abutment surfaces, which are positioned such that when the holder is inserted into the interferometer housing, the abutment surfaces 108, 109 and 110 are positioned to be engaged by the free ends of the plungers 59. The flat abutment surfaces 108, 109 and 110 are located on the back face of the holder body exactly opposite to the locating surfaces 90, so that when the plungers engage the surfaces 108-110, they will press the holder such that the surfaces 90 are engaged tightly against the positioning surfaces 50-52 in the interferometer housing, with the force of the plungers being applied to the holder body 80 directly opposite the surfaces 90 so that substantially no stress is imposed on the holder body by the force applied by the plungers at any areas of the holder body other than those lying directly under the locating surfaces 90. By applying pressure to the holder body in this manner, mechanical distortions of the holder body as a result of the pressure applied by the plungers will be avoided while nonetheless firmly pressing the holder body against the positioning surfaces. Because the stop pins 55 loosely engage the shoulders 104 and 105 on the holder body, the holder 21 can freely be moved under the force applied by the plungers 59 to bring the locating surfaces into contact with the positioning surfaces without any substantial frictional interference from the engagement between the pins 55 and the support shoulders 104 and 105. Moreover, because the support shoulders 104 and 105 are preferably located near the vertical plane of the center of gravity of the beamsplitter holder 21 (with beamsplitter and compensator), the pressure applied by the plungers to the areas 108-110 will tend to drive the holder directly into the positioning surfaces without tilting of the holder.

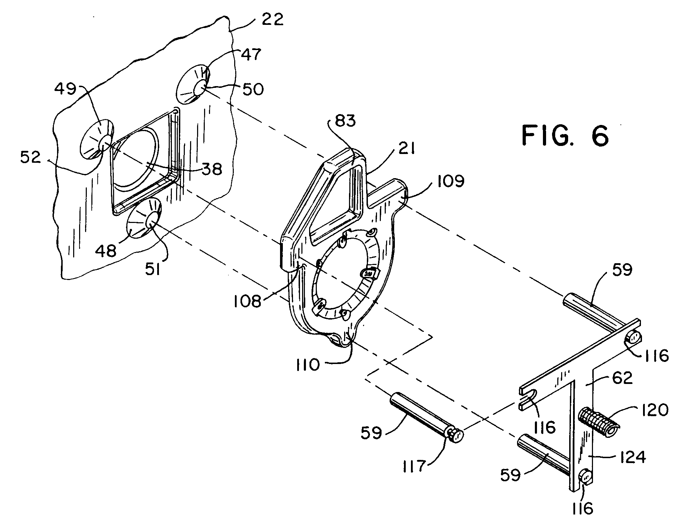

The plungers 59 are mounted to slide loosely within corresponding bores 113 formed in the interferometer housing, as generally illustrated in Fig. 7. The plungers 59 are engaged and are pressed forward by a one piece pressure plate 62. The plate 62 may be formed as a Tee-shaped bar, as illustrated in Fig. 6, which has slots 116 at the end of each of the T arms which fit with grooves 117 in the plungers near the ends of the plungers. The relatively loose engagement between the Tee bar pressure plate 62 and the plungers 59, and the relatively loose mounting of the plungers within the bores 113 in the interferometer housing, permits the plungers to seat themselves readily and square up against the flat abutment surfaces 108-110 on the back face 83 of the holder body so as to apply uniform pressure to the holder body.

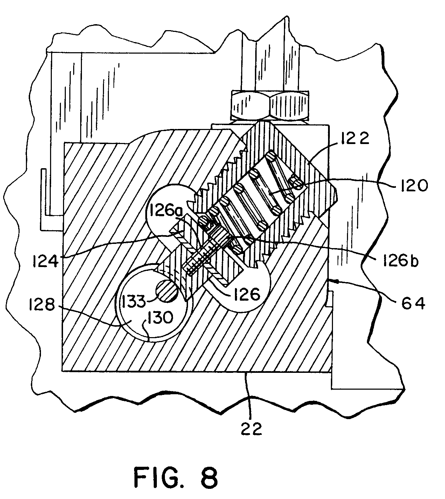

The spring loaded drive unit 64 includes a spring 120 (shown schematically in Figs. 6 and 7). As shown in the more detailed cross-sectional view of Fig. 8, the spring 120 is contained within a threaded cap 122 which has a hollow interior which contains the spring. The cap threads into a tapped hole in the housing 22 to bring the spring into contact with the flat side of the Tee bar pressure plate 62. A portion of the upright arm 124 of the Tee bar 62 is against a cam follower 126 which rides in a bore formed in the interferometer housing 22. A cam 128 is formed to turn within a bore 130 formed vertically in the housing 22. An upper knob 132 of the cam 128 can be grasped by a user to turn the cam 128 from its position shown in Fig. 8, in which an eccentrically mounted shaft portion 133 of the cam 128 presses the cam follower inwardly to compress the spring 120 to thereby draw the plungers 59 away from engagement with the beamsplitter holder 21, to a position in which the eccentric shaft 133 releases the cam follower 126 so that the spring 120 can press against the Tee bar pressure plate 62 to urge the plungers 59 into contact with the beamsplitter holder. The Tee bar 62 has a shallow slot cut crossways through it to align the cam follower 126 which is attached with a screw 126a which has a head 126b which also acts as an internal spring guide for the spring 120. The spring 120 applies its load to the Tee bar 62 which distributes the load equally to the three plungers 59; these in turn apply their loads to the holder 80 at the locations 108-110, forcing the other side of the holder against the pads 50-52, clamping the holder in place. The cam follower 126 is not in contact with the eccentric shaft cam 133 located in the vertical bore 130 in the housing 22 at this time. To release the holder 80, the cam with the eccentric cam 133 formed into it is rotated by an operator by rotating the knob 132 such that the cam 133 pushes the cam follower 126 and the Tee bar 62 back into the spring, compressing it. This removes the load from and extracts the plungers 59, which unclamps the holder assembly 21, allowing it to be removed.

As noted above, it is desirable that the beamsplitter 95 be held firmly within the beamsplitter holder 21 so that the semi-transparent surface 96 of the beamsplitter is in a precisely defined position with respect to the beamsplitter holder. As illustrated in Fig. 7, the beamsplitter makes contact with the mounting surfaces 88 of the inwardly extending tabs 93 to support the beamsplitter 95 at these locations. The tabs 93 could be also formed as a complete ring around the inside of the wall 81 defining the main opening in the beamsplitter, and could have forms other than the semi-circular tabs illustrated in Fig. 7. The compensator element 99, a conventional element used with beamsplitters, is mounted within the beamsplitter holder 21 at a position adjacent the beamsplitter 95. The compensator element 99 rests against the surfaces of the tabs 93 opposite to the mounting surfaces which support the beamsplitter 95. It is not necessary that the compensator element 99 have its surfaces quite as precisely aligned as the beamsplitter 95 with respect to the remainder of the beamsplitter holder. Nonetheless, it is desirable that the compensator element 99 be properly mounted within the beamsplitter holder and it is also desirable that the face 136 of the compensator element 99 which is adjacent to the semi-transparent surface 96 be not quite parallel to the surface 96 to minimize the possibility of constructive interference reflections between these two surfaces, which is conventional practice in the construction of beamsplitter holders.

To hold the beamsplitter 95 and the compensator element 99 firmly in place within the holder 21, but without imposing undue stresses on either the beamsplitter, the compensator element, or the holder body, a spring loaded clip system is preferably utilized. Clips 140 are mounted at spaced positions around the main opening of the holder body on both the back face of the holder body and at the front face on the mounting ring 85 to engage the edges of the beamsplitter 95 at the front face and the compensator element 99 at the back face. Springs 142 extend through holes 143 formed in the holder body through the body portion 80 and the mounting ring 85. The holes 143 are located just outwardly of the main opening. Each spring is engaged by a hook 144 on one end of the spring to one of the clips 140 which engages the beamsplitter and by a hook 144 at the other end of the spring to one of the clips 140 which engages the compensator element 99. The springs 142 pull the clips 140 inwardly so that the clips produce an evenly distributed force which is applied straight through the holder body 80 and ring 85 so as to minimize distortion of the holder body and the ring. Rubber pads 145 are preferably mounted between the clips 140 and the surface of the beamsplitter 95 to minimize concentrations of stress imposed on the beamsplitter by the clips which might otherwise damage the beamsplitter.

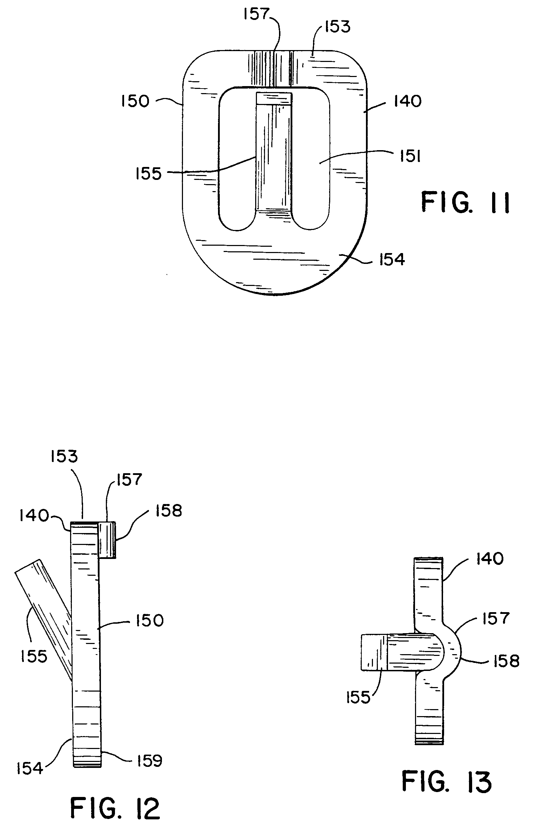

A preferred construction of the clips 140 is shown in the views of Figs. 11-13. Each clip 140 has a base ring 150 surrounding a central opening 151, the ring having a back section 153 and a front pad section 154, and a cantilevered arm 155 which extends upwardly and backwardly from the pad section 154. The back section 153 has an indented fulcrum 157 which extends below the bottom surface of the remainder of the ring 150. When the hook 144 at the end of a spring 142 is hooked over the cantilevered arm 155, the spring pulls the arm 155 and the remainder of the clip 140 downwardly and back toward the fulcrum, e.g., to the right in the view of Fig. 12. The bottom surface 158 of the fulcrum indentation 157 engages a surface of the holder body, e.g., the body portion 80 or the mounting ring 85, and the clip 140 pivots about the fulcrum surface 158 to bring the bottom surface 159 of the pad section 154 into contact with the surface of the beamsplitter (or the pad 145 in contact with the beamsplitter) for those clips 140 mounted to engage the beamsplitter, or into contact with the compensator element 99 for those clips 140 mounted to engage the compensator element. Consequently, the point of contact between each clip 140 at the surface 158 where it contacts the holder body is spaced well away from the walls which define the main opening of the beamsplitter holder, so that any mechanical stresses imposed on the beamsplitter holder body by the force of the clips being drawn together will not cause mechanical distortions in the holder body or the beamsplitter itself. Moreover, it is seen from the cross-sectional view of Fig. 7 that the force applied by the clips 140 at their pad sections 154 to the beamsplitter 95 and to the compensator element 99 is directed in a straight line between the pad sections 154 of the two opposing clips 140 so that no force from these clips is exerted on the beamsplitter holder itself except straight through the tabs 93. Moreover, the force applied by the clips 140 to the beamsplitter 95 and the compensator element 99 (and through the tabs 93 between the beamsplitter and the compensator) is a completely axial force without imposing any lateral or twisting stress on these elements, thereby minimizing distortions of these elements.

It will, of course, be apparent that mechanisms other than the clips 140 may be utilized to hold the beamsplitter 95 and the compensator element 99 to the holder body. Although it is preferable that the semi-transparent surface 96 of the beamsplitter 95 engage mounting surfaces 88 that are coplanar with the positioning surfaces 90, the surfaces 88 and 90 do not need to be coplanar provided that they are precisely spaced from and parallel to one another. It is, however, preferred that the surfaces 90 and 88 be coplanar. It is also understood that the surfaces 90 and 88 may be formed as continuous surfaces, rather than as the tops of pads which, as illustrated in the drawings, are raised above the remaining metal structures of the body portion 80. By forming the structures defining the surfaces 88 and 90 as raised pads, less machining of the material of the holder body portion 80 is required. The body portion 80 can be formed, for example, as a cast metal part with raised islands at the positions where the surfaces 90 and 88 are to be formed, with these surfaces then being precisely machined so that they are coplanar with each other, which involves relatively conventional machining processes.

It is understood that the invention is not limited to the particular embodiments set forth herein as illustrative, but embraces such modified forms thereof as come within the scope of the following claims.

## Claims

1. A beamsplitter holder for use in mounting a beamsplitter within an interferometer, comprising:
(a) a beamsplitter having a planar semi-transparent surface and an opposite surface;
(b) a holder body having a main opening;
(c) coplanar mounting surfaces on the holder body at the main opening positioned to engage the semi-transparent surface of the beamsplitter so that the mounting surfaces and the semi-transparent surface of the beamsplitter are coplanar;
(d) means for holding the beamsplitter in place against the mounting surfaces at the main opening;
(e) locating surfaces on the holder body spaced outwardly from the beamsplitter, the locating surfaces formed coplanar with the mounting surfaces.

2. The beamsplitter holder of claim 1, wherein the holder body has a front face and a back face, wherein the mounting surfaces and the locating surfaces are formed at the front face and extend above adjacent surfaces forming the front face of the holder.

3. The beamsplitter holder of claim 2, wherein the locating surfaces are formed on three raised pads on the front face which are spaced about the main opening in the holder body.

4. The beamsplitter holder of claim 2 or 3, wherein the mounting surfaces are formed on tabs which extend inwardly from an inner wall which defines the main opening in the holder body.

5. The beamsplitter holder of claim 4, wherein there are three tabs which are equally spaced about the main opening, the tabs being substantially semi-circular, the tabs having the mounting surface on one surface thereof facing the same direction as the front face of the holder body, and an opposite surface on each tab facing in the same direction as the back face of the holder body.

6. The beamsplitter holder of any preceding claim, including a beamsplitter mounting ring surrounding the beamsplitter.

7. The beamsplitter holder of any preceding claim, wherein the holder body has an upwardly extending portion with an indentation therein which provides a convenient handle for grasping by a user.

8. The beamsplitter holder of any preceding claim, wherein the holder body has laterally extending portions which extend from opposite sides of the main opening and have downwardly facing shoulders whereby the beamsplitter holder can be held in a vertical position within an interferometer.

9. The beamsplitter holder of any preceding claim, wherein the holder body has a body portion integrally formed of metal and a separate mounting ring surrounding the beamsplitter, and wherein the mounting surfaces and the locating surfaces are machined flat together on the body portion to lie on the same plane.

10. A beamsplitter holder for use in mounting a beamsplitter within an interferometer, comprising:
(a) a beamsplitter having a planar semi-transparent surface and an opposite surface;
(b) a holder body having an inner wall which defines a main opening in the holder body, the holder body having a front face and a back face;
(c) three tabs extending inwardly from the inner wall which defines the main opening in the holder body and equally spaced about the main opening, one surface of each tab facing the same direction as the front face of the holder body comprising a mounting surface and with the mounting surfaces of the tabs being coplanar, and an opposite surface on each tab facing in the same direction as the back face of the holder body; and
(d) means for holding the beamsplitter in place with its semi-transparent surface against the mounting surfaces by applying force to the surface of the beamsplitter opposite the semi-transparent surface at positions above the tabs.

11. The beamsplitter holder of claim 10, including a compensator disk mounted at the main opening in the holder body and having opposite surfaces, the compensator disk being mounted so that one of its surfaces engages the surfaces of the taps opposite to the mounting surfaces, and also including means for holding the compensator disk in the main opening of the holder body.

12. The beamsplitter holder of claim 10 or 11, further including locating surfaces formed on three raised pads on the front face of the holder body which are spaced about the main opening in the beam splitter, the locating surfaces formed coplanar with the mounting surfaces on the tabs.

13. The beamsplitter holder of any preceding claim, wherein the means for holding the beamsplitter in place incudes a plurality of clips positioned about the beamsplitter, each clip having a section extending outwardly from the beamsplitter adjacent the main opening and a section that extends to engage a portion of the surface of the beamsplitter opposite the semi-transparent surface, and a spring mounted to each clip to resiliently draw the clip inwardly toward the holder body to hold the beamsplitter in place.

14. A beamsplitter holder for use in mounting a beamsplitter within an interferometer, comprising:
(a) a beamsplitter having a planar semi-transparent surface and an opposite surface;
(b) a holder body having a main opening and a front face and a back face;
(c) coplanar mounting surfaces on the holder body at the main opening positioned to engage the semi-transparent surface of the beamsplitter so that the mounting surfaces and the semi-transparent surface of the beamsplitter are coplanar;
(d) a plurality of clips positioned about the beamsplitter, each clip having a section extending outwardly from the beamsplitter adjacent the main opening and a section that extends to engage a portion of the beamsplitter opposite the semi-transparent surface, and a spring mounted to each clip to resiliently draw the clip inwardly toward the beamsplitter holder body to hold the beamsplitter in place.

15. The beamsplitter holder of claim 14, wherein the back face of the holder body has flat abutment surfaces formed thereon which are located directly opposite to the locating surfaces on the front face of the holder body.

16. The beamsplitter holder of claim 13, 14 or 15, wherein each clip has a base ring including a front pad section for engaging the surface of the beamsplitter and a back section, the back section having a fulcrum extending below the bottom surface of the remainder of the base ring, the fulcrum of the clip engaging the holder body and the front pad engaging the beamsplitter.

17. The beamsplitter holder of claim 16, wherein each clip further includes a cantilevered arm extending upwardly and backwardly from the front pad of the base ring to allow the spring to be hooked over the arm and thereby engaging the clip to draw it toward the holder body.

18. The beamsplitter holder of any one of claims 13 to 17, wherein the holder body has holes therein extending from the front face to the back face at positions adjacent the main opening where the clips are positioned, the clips positioned at both the front face and the back face of the holder at the holes, and wherein each spring extends through a hole to engage a clip at the front face of the holder body and a clip at the back face of the holder body.

19. The beamsplitter holder of any one of claims 13 to 18, including a compensator disk mounted in the holder adjacent to a beamsplitter, the clips at the back face of the beamsplitter holder engaging a surface of the compensator and the clips at the front face of the beamsplitter holder engaging the surface of the beamsplitter.

20. An interferometer comprising:
(a) an interferometer housing having an entrance opening and an exit opening;
(b) a moving mirror mounted for axial movement in a direction perpendicular to the mirror;
(c) a fixed mirror mounted to the interferometer housing at a position perpendicular to the moving mirror;
(d) a beamsplitter holder mounted in the interferometer housing adjacent to the entrance and exit openings and to the fixed moving mirrors, the beamsplitter holder being in accordance with claim 1 or any preceding claim appendant thereto;
(e) coplanar positioning surfaces formed in the interferometer housing at positions facing the locating surfaces on the beamsplitter holder, the positioning surfaces in the interferometer housing located such that when the locating surfaces on the holder body engage the positioning surfaces on the interferometer housing, the semi-transparent surface of the beamsplitter will lie in substantially the same plane as the positioning surfaces on the interferometer housing so that the semi-transparent surface of the beamsplitter will be located at the proper position in the interferometer; and
(f) means for selectively pressing the beamsplitter holder toward the positioning surfaces such that the locating surfaces on the holder body engage the positioning surfaces to firmly position the semi-transparent surface of the beamsplitter within the interferometer.

21. The interferometer of claim 20, wherein the means for pressing the beamsplitter holder includes a plurality of plungers mounted in bores in the interferometer housing which are positioned to engage abutment surfaces on the holder body at positions opposite to the positions of the locating surfaces of the holder body when the beamsplitter holder is in place within the interferometer housing, and means for selectively pressing the plungers toward the holder body when the holder is in place within the interferometer.

22. The interferometer of claim 21, wherein the means for selectively pressing the plungers includes a pressure plate connected to each of the plungers and a spring connected to press against the pressure plate, and further including a cam selectively operable by a user which is mounted within the interferometer housing and which can be turned from a position in which it pushes the pressure plate and the plungers away from the beamsplitter holder to a position in which the pressure plate is released so that the spring can apply spring pressure against the pressure plate and the pressure plate can press the plungers into contact with the holder to locate the holder properly within the interferometer.

23. The interferometer of claim 20, 21 or 22, wherein the holder has laterally extending portions which extend from opposite sides of the main opening in the holder body and have downwardly facing shoulders, and wherein the interferometer housing includes stop pins extending inwardly at positions within the holder body positioned to engage the shoulders on the holder when the holder is inserted into position within the interferometer to support the holder at a desired vertical position within the interferometer housing.

24. The interferometer of any one of claims 20 to 23, wherein the interferometer housing is formed of a cast metal material and wherein the positioning surfaces in the interferometer housing are formed integrally with the remainder of the interferometer housing and are machined flat surfaces which are separated from one another and are coplanar with each other.

25. The interferometer of any one of claims 20 to 23, wherein the interferometer housing is formed integrally as a one piece casting of metal, and further including at least three mounting feet extending downwardly from the remainder of the interferometer housing at positions located beneath the beamsplitter holder laterally of the beamsplitter holder and at another position adjacent the beamsplitter holder, each of the mounting feet having flat bottom surfaces which are coplanar with one another, and bolt holes formed in the mounting feet to allow the mounting feet to be bolted to a substrate to fix the interferometer in place.
